(19) Europäisches Patentamt
European Patent Office
Office européen des brevets

(11) **EP 2 233 209 B1**

(12) **EUROPÄISCHE PATENTSCHRIFT**

(45) Veröffentlichungstag und Bekanntmachung des Hinweises auf die Patenterteilung:
**05.11.2014   Patentblatt 2014/45**

(51) Int Cl.:
*B01J 35/04* *(2006.01)*      *F01N 3/022* *(2006.01)*
*B01J 19/24* *(2006.01)*

(21) Anmeldenummer: **10157135.4**

(22) Anmeldetag: **22.03.2010**

(54) **Formkörper**

Moulded part

Corps de formage

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.03.2009   EP 09156023**

(43) Veröffentlichungstag der Anmeldung:
**29.09.2010   Patentblatt 2010/39**

(73) Patentinhaber: **BASF SE**
**67056 Ludwigshafen (DE)**

(72) Erfinder: **Gerlinger, Wolfgang**
**67117, Limburgerhof (DE)**

(56) Entgegenhaltungen:
EP-A1- 1 982 762          WO-A1-02/34383
WO-A1-2009/005371     DE-A1- 10 208 711
US-A1- 2004 076 562     US-A1- 2006 083 675

EP 2 233 209 B1

**Beschreibung**

Die Erfindung betrifft einen verbesserten, durchgängige Kanäle aufweisenden, einstückigen Formkörper mit einem hydraulischen Durchmesser D und einer Höhe H für den Wärme- und / oder Stoffaustausch und / oder die heterogene Katalyse sowie Verfahren zur Herstellung des erfindungsgemäßen Formkörpers und Verfahren zur Durchführung heterogen katalysierter chemischer Reaktionen unter Verwendung der erfindungsgemäßen Formkörper.

Breite Anwendung in der heterogenen Katalyse finden Reaktoren mit Katalysatorfestbetten. In der Vergangenheit wurden häufig regellose Schüttungen aus Katalysatorformkörpern verwendet. Diese weisen eine ungeordnete Strömungsführung mit starker Verwirbelung bei der Umströmung der Formkörper auf. Die Wärmeabfuhr an die Reaktorwand erfolgt dabei hauptsächlich durch die mit der Verwirbelung verbundenen Dispersionseffekte, d.h. durch die lokale Vermischung von Volumenelementen mit unterschiedlichen Temperaturen. Diese Wärmeabfuhr wird folglich mit einem vergleichsweise hohen Druckverlust erkauft. Andererseits werden z.B. in der Automobilabgaskatalyse sogenannte Monolithe eingesetzt, die parallele Strömungskanäle in Hauptströmungsrichtung aufweisen. Diese Katalysatoren können bei sehr geringen Druckverlusten betrieben werden, durch den fehlenden Queraustausch der Strömungen durch die einzelnen Kanäle ist die Wärmeabfuhr nach außen sehr behindert.

Zur Verbesserung des Wärme- und oder Stoffaustauschs oder der heterogenen Katalyse sind unterschiedliche Einbauten in Apparaten wie Reaktoren bekannt.

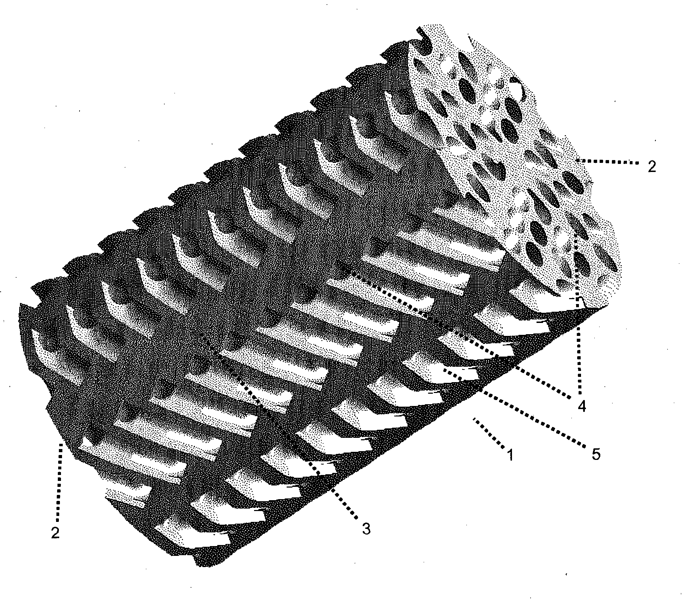

So beschreibt die DE 10159824 eine geordnete Packung mit parallel zueinander angeordneten Stromleitblechen für einen Reaktor, wobei ein Randspalt an der Reaktorinnenwand freigelassen wird (Anspruch 1). Durch die geordnete Strömungsführung wird das Fluid konvektiv vom Reaktorzentrum an die Wand geführt, so dass die Reaktionswärme an die Reaktorwand abgeführt werden kann. Dieser Lehre nachteilig ist allerdings, dass die Kanäle, wie sie z.B. in Figur 1 dargestellt sind, aufgrund unterschiedlicher Topologie nicht gleichmäßig durchströmt werden, was zu über den Reaktorquerschnitt ungleichmäßigen Strömungsgeschwindigkeiten und damit zu Katalysatorbelastungen resultierend aus diesen Inhomogenitäten führt. Insbesondere bei Reaktionen mit selektivitätsmindernden Parallel- und Folgereaktionen ist dieser Effekt sehr unerwünscht und nachteilig. Weiterhin gestaltet sich der Einbau dieser Packungen, bei welchen die gewellten Stromleitbleche (A) den Reaktorquerschnitt vollständig ausfüllen (Anspruch 1) als aufwändig.

In der DE 10208711 wird ein keramisches Packungselement für eine Kolonne beschrieben, bei welchem die Strömungskanäle in mehreren, zueinander parallelen Ebenen angeordnet sind (Zusammenfassung).

Nachteilig in den dort aufgeführten Ausführungsformen ist, dass die durch die Anordnung der verschiedenen Packungselemente entstehenden Strömungskanäle nicht zu identischen Strömungskanälen führt, so dass die Kanäle ungleichmäßig durchströmt werden. Darüber hinaus ergibt sich keine Strömungsführung von Reaktorzentrum in Richtung Reaktorwand, so dass kein gezielter Wärmetransport aus oder in das Reaktionsrohr erfolgt.

Stand der Technik sind des Weiteren Geometrien von Packungen, wie sie z.B. in der Destillation angewendet werden. Diese sind aufgebaut aus parallel angeordneten, gewellten Blechen (analog zu DE 10159824 ohne die ungewellten Bleche). Sie bieten eine hohe Oberfläche, um die bei Destillationen notwendige Austauschfläche für Phasenübergänge zur Verfügung zu stellen. Die Ausrichtung der Wellen ist ebenfalls gegenüber der Hauptströmungsrichtung geneigt. Dadurch entstehen aber keine durchgängigen Kanäle, sondern ein verzweigtes Netz von gekreuzten Kanälen, sodass an allen Kreuzungspunkten der Kanäle dem durchströmenden Medium ein Wechsel der Kanäle möglich ist. Dies wiederum hat zur Folge, dass die Strömung nicht vollständig der Ausrichtung der geometrischen Wellen folgt, sondern insbesondere bei höheren Strömungsgeschwindigkeiten mehr der Hauptströmungsrichtung folgt (siehe F. Stoter, Modelling of Maldistribution in Structured Packings: from detail to column design, Technische Universität Delft, Dissertation 1993, Seiten 23-26 und Z. Olujic et al., Stretching the Capacity of Structured Packings, Ind. Eng. Chem. Res. 40, pp. 6172-6180, 2001). Das bedeutet, dass der radiale Wärmeaustausch gegenüber regellosen Schüttungen zumindest nicht ausgeprägt erhöht wird und es ergeben sich keine definierten, gleichmäßigen Strömungsverhältnisse, wodurch Wärme gleichmäßig und effektiv zu- oder abgeführt werden könnte.

Es stellte sich somit die Aufgabe, verbesserte Formkörper zu finden, welche die geschilderten Nachteile vermeiden und die in verfahrenstechnisch einfachere Art und Weise einen effektiven und gleichmäßigen Transport von der Reaktionswärme ermöglichen. Gleichzeitig soll die Oberfläche der Kanäle im Formkörper gleichmäßig umströmt werden, damit ein gleichmäßiger Stoff- und Wärmeaustausch zwischen Fluid und Festkörper ermöglicht wird.

Die Aufgabe wird gelöst durch einen durchgängige Kanäle aufweisenden, einstückigen Formkörper mit einem hydraulischen Durchmesser D und einer Höhe H für den Wärme- und / oder Stoffaustausch und / oder heterogene Katalyse, wobei die Kanäle einem zugeleiteten Einsatzstoff ein über eine oder mehrere Richtungsänderungen erfolgendes Durchströmen des Formkörpers von der Eintrittsseite zur Austrittsseite ermöglichen und die Hauptströmrichtung des Einsatzstoffes im Formkörper parallel zur Senkrechten durch die vom Einsatzstoff angeströmten Stirnfläche des Formkörpers ist und die Kanäle im Innern des Formkörpers in ihrem Verlauf mindestens eine Umlenkung aufweisen, zwischen der die Kanäle gerade Wegstrecken ausbilden, wobei die Länge dieser geraden Wegstrecken eine maximale Lauflänge nicht überschreitet und alle Kanäle die gleiche Topologie aufweisen und die Kanäle neben den beiden Öffnungen an der Eintrittsseite und Austrittsseite dazwischen mindestens eine weitere Öffnung an der Außenfläche des Formkörpers aufweisen, wobei die Kanäle in einem mittleren Winkel α gegenüber der Achse der Hauptströmungsrichtung orientiert sind und die Höhe H des Formkörpers mindestens einen Wert beträgt, der sich nach der Formel:

$$H = D / \tan(\alpha)$$

berechnet.

Weiterhin betrifft die Erfindung bevorzugte Ausgestaltungen des Formkörpers, ein Verfahren zur Herstellung des Formkörpers sowie Verfahren zur Durchführung heterogen katalysierter chemischer Reaktionen, bei welchen sich die Verwendung der erfindungsgemäßen Formkörper besonders empfiehlt.

Der erfindungsgemäße Formkörper ist einstückig ausgeführt. Hierbei sind die Kanäle des Formkörpers bevorzugt von einem Feststoff begrenzt, wobei die Einstückigkeit des Feststoffes vorteilhafterweise bevorzugt bewirkt, dass die Kanäle im Innern des Formkörpers voneinander abgetrennt sind, sodass hier kein konvektiver Austausch der durch die Kanäle strömenden Medien zwischen den Kanälen im Rahmen einer Sekundärströmung erfolgen kann. Unter dem Inneren des Formkörpers versteht man hierbei den gesamten Formkörper ohne die ihn umgebenden Außenflächen, also im Falle eines bevorzugten, zylindrischen Formkörpers ohne die beiden kreisförmigen Stirnflächen (Ein- bzw. Austrittsflächen) sowie ohne die diese beiden Flächen verbindende Mantelfläche. Bevorzugt werden die erfindungsgemäßen Formkörper so hergestellt, dass man zuerst den einstückigen Formkörper herstellt und anschließend die erfindungsgemäßen Kanäle darin herstellt. Dies kann bevorzugt dadurch geschehen, dass der Formkörper z.B. durch Rapid Prototyping aus kleinen Partikeln zusammengefügt wird, die fest miteinander versintert oder verklebt oder auf andere Art fest miteinander verbunden werden. Weitere Möglichkeiten bestehen darin, die Kanäle aus einem festen Block herauszumodellieren, verschiedene kleinere Teilformkörper durch Verkleben, Verschweißen, Versintern oder andere Methoden fest miteinander zu verbinden. Alternativ können die Kanäle z.B. aus einem Polymer als Positiv modelliert werden, welche anschließend von einem Fluid umgeben werden. Nach Aushärten dieses Fluids kann dann das Positiv durch Herauslösen oder Herausbrennen oder durch andere Methoden entfernt werden. Der einstückige Formkörper kann auch durch andere Methoden oder durch Kombination der genannten Methoden aufgebaut werden. Hinweise zur Herstellung von Körpern mittels des Rapid-Prototyping-Verfahrens finden sich beispielsweise in der europäischen Patentanmeldung mit dem Aktenzeichen 07118050.9, auf die hiermit Bezug genommen wird.

Unter einstückigem Feststoff im Sinne dieser Erfindung sind auch poröse Materialien zu verstehen, wie sie beispielsweise in der heterogenen Katalyse oft eingesetzt werden. Solche porösen Feststoffe können sich beispielsweise bei für die Herstellung der erfindungsgemäßen Formkörper verwendeten Sinterprozessen ergeben, bei welchen die Feststoffpartikel im Rahmen der Sinterung zu einem Feststoffkörper verbunden werden, wobei zwischen den durch den Sinterprozess verbundenen Feststoffpartikeln Hohlräume erhalten bleiben können, durch welche beim erfindungsgemäßen Einsatz eines solchen Formkörpers ggf. ein Fluid - wenn auch anteilig betrachtet im Vergleich mit der Hauptströmung durch die Kanäle in nur sehr geringen Mengen - im Rahmen einer Sekundärströmung zwischen zwei Kanälen hindurchströmen kann. Bei einstückigen Formkörpern im Sinne dieser Erfindung sind die hydraulischen Durchmesser der Öffnungen (z.B. Poren oder Trennfugen), die Kanäle verbinden, bevorzugt kleiner als 2 mm im Fall von Trennfugen und bevorzugt kleiner als 500 μm im Fall von Poren. Die sich in ihrem erfindungsgemäßen Einsatz ggf. aufgrund vorhandener Porositäten ergebende Sekundärströmung beträgt weniger als 1 Vol.-%, bevorzugt weniger als 0,1 Vol.-% bezogen auf die Hauptströmung durch die Kanäle. Der Anteil dieser ggf. vorhandenen Sekundärströmung ist somit sehr gering, jedoch auch bei den sich ggf. durch den Herstellungsprozess des Formkörpers ergebenden Porositäten und somit geringen Sekundärströmungen kommen die erfindungsgemäßen Vorteile zum Tragen.

In einer weiteren Ausgestaltung können auch mehrere erfindungsgemäße Formkörper aneinandergesetzt oder ein Formkörper durchtrennt - und somit mehrere Formkörperteile erzeugt werden - und später beim Einbau wieder aneinandergesetzt werden. An den sich zwischen den einzelnen Formkörpern bzw. Formkörperteilen ergebenden Trennfugen können im Betrieb auch ggf. aufgrund von Undichtigkeiten geringe Leckageströme auftreten, welche in ihrer Größenordnung mit den vorstehend erläuterten Sekundärströmungen in etwa vergleichbar sind (in der Regel kleiner als 1 Vol.-%, bevorzugt kleiner als 0,1 Vol.-% bezogen auf die Hauptströmung durch die Kanäle). Auch hier führen solche geringen Abweichungen nicht zu einer relevanten Beeinträchtigung der erfindungsgemäßen Vorteile und auch solche kombinierten, durch Zusammenschaltung mehrerer, einzelner Formkörper bzw. Formkörperteile entstandenen Formkörper sind als erfindungsgemäße Formkörper zu verstehen.

In einer weiteren Ausgestaltung können aneinander gesetzte, erfindungsgemäße Formkörper auch zu einem Formkörper verschmolzen werden bzw. ein Formkörper direkt aus verschiedenen erfindungsgemäßen Teilformkörpern bestehen. Die Kanäle der unterschiedlichen Teilformkörper weisen dann gleiche hydraulische Durchmesser auf und die Strömungswiderstände der Kanäle sind vom Fachmann so zu kalibrieren, dass sich die Strömungsgeschwindigkeiten in den Kanälen der verschiedenen Teilformkörper angleichen.

Der Formkörper weist durchgängige Kanäle auf, die an der Eintrittsseite des Formkörpers beginnen und an der Austrittsseite des Formkörpers enden. Ein- und Austrittsseite bestehen bevorzugt aus ebenen Flächen und sind zueinander parallel. Es können bei Ein- und Austrittsseite auch Oberflächenstrukturen wie Wellen, Nuten oder Stege vorgesehen werden. Die Orientierung der Ein- und Austrittsfläche ist definiert durch deren Flächennormalenvektoren. Sind die Ein- und Austrittsflächen nicht eben, so ergibt sich der Vektor der Flächennormale jeweils aus Addition der Flächennormalenvektoren von Teilflächen. Der Formkörper wird derart in den Reaktor eingebaut, dass der Normalenvektor der Ein- und Austrittsflächen weitgehend parallel zur Hauptströmungsrichtung orientiert ist.

Die Hauptströmungsrichtung ist definiert durch den Strömungsweg durch den Reaktor, bei einem zylindrischen Reaktor ist die Hauptströmungsrichtung z.B. parallel zur Zylinderachse.

Der Strömungsquerschnitt beschreibt die Schnittfläche des Formkörpers senkrecht zur Hauptströmungsrichtung. In den meisten Fällen beschreiben die Ein- und Austrittsfläche jeweils den Strömungsquerschnitt.

Die Kanäle weisen vorteilhafterweise eine identische Topologie auf. Unter Topologie eines Kanals versteht man geometrische Abfolge und Dimensionierung von geraden Kanalstrecken, Umlenkungen und Wanddurchbrüchen, welche auch als Öffnungen (an der Außenfläche des Formkörpers) bezeichnet werden, und somit die Strömungsführung, die sich beim Durchströmen von Eintrittsseite zu Austrittsseite des Formkörpers ergibt. Gerade Kanalstrecken, Umlenkungen und Wanddurchbrüche werden im Folgenden als Elemente der Topologie bezeichnet.

Das einen speziellen Kanal durchströmende Medium erfährt somit durch die Abfolge an geraden Kanalstrecken, Umlenkungen und Wanddurchbrüchen durch die vorgegebene charakteristische Topologie eine Strömungsführung, welche hinsichtlich ihrer Abfolge symbolisch durch eine Darstellung der Art G1, U1, G2, U2, W1, U3, G3, ..., Gn beispielhaft veranschaulicht werden kann. "G1" bedeutet hierbei in Strömungsrichtung betrachtet die erste, gerade Kanalstrecke, "U1" die erste Umlenkung, "G2" die zweite, gerade Kanalstrecke, "U2" die sich daran anschließende, zweite Umlenkung, "W1" den ersten Wanddurchbruch, "U3" die dritte Umlenkung usw.

Da erfindungsgemäß sämtliche Kanäle die gleiche Topologie aufweisen, bedeutet dies, dass das durchströmende Medium in einem anderen, benachbarten Kanal bei dem betrachteten Formkörper letztlich integral betrachtet die gleiche Ablenkung erfährt, lediglich die Abfolge kann phasenverschoben sein, so kann es hier z.B.

zu einer Abfolge der Art G2, U2, W1, U3, G3, ..., Gn, G1, U1 kommen, d.h. hier passiert das diesen Kanal durchströmende Medium zuerst die zweite gerade Wegstrecke und erst ganz am Ende die erste Umlenkung. Hierbei sind die Elemente mit gleicher Bezeichnung in den beiden Kanälen identisch (z.B. G2 im ersten Kanal gleicht G2 im zweiten Kanal) und die Elemente sind durch ihre Längen, Kanalformen, hydraulischen Durchmesser und Winkel gegenüber der Hauptströmungsrichtung zu definieren. Umlenkungen werden in der Regel als Kreisbögen definiert, so dass die Biegung durch Angabe eines Radius erfolgen kann. Die Krümmung kann aber auch z.B. durch ovale Bögen beschrieben werden. Im Falle von Umlenkungen ist weiterhin festzulegen mit welchem Radius, Winkel und in welche Richtung die Umlenkung erfolgen soll. Bei einer erfindungsgemäßen Umlenkung wird die Strömungsführung des durch den Kanal strömenden Mediums bevorzugt um mindestens 20°, besonders bevorzugt mehr als mindestens 45° abgelenkt. In einer bevorzugten Ausgestaltung der Erfindung bewirkt mindestens eine Umlenkung eine Abänderung der Strömungsführung um mindestens 90°. Bevorzugt beträgt die Summe aller Ablenkungen, welche längs eines Kanals bei der Durchströmung von Eintrittsfläche zu Austrittsfläche des Formkörpers erfolgen, mindestens 180°. Geringfügige, sich beispielsweise aus technischen Gründen ergebende Abweichungen von gleichen Elementen können nicht immer ausgeschlossen werden, dies hat jedoch nur einen sehr geringen Einfluss auf die Wirksamkeit der erfindungsgemäßen Vorrichtung. So ist zum Beispiel festzustellen, dass bei Verkürzen der Höhe H des Formkörpers um etwa 10% die Wirksamkeit nicht wesentlich beeinträchtigt wird. Zwar wird bei einer solchen Maßnahme entsprechend bei jedem Kanal ebenfalls 10% abgeschnitten und somit keine vollständige Identität der Topologie mehr gewährleistet, die erfindungsgemäßen Vorteile kommen jedoch trotzdem noch signifikant zur Geltung.

Ein großer Winkel gegenüber der Hauptströmungsrichtung führt zu häufigerer Strömungsführung von innen nach außen und erhöht den radialen Stoff- und Wärmetransport. Demgegenüber erhöht sich der Druckverlust. Je nach Anwendung beträgt der Winkel gegenüber der Hauptströmungsrichtung bevorzugt zwischen 30° und 80°. Die Kanalform ist beliebig, bevorzugt werden die Kanäle kreisrund, oval, quadratisch oder regelmäßig polygonförmig ausgeführt. Besonders bevorzugt werden kreisrunde oder quadratische Kanäle eingesetzt. Bei sehr kleinen hydraulischen Durchmessern der Kanäle erhöht sich der Stoff- und Wärmetransport zwischen Feststoff und strömendem Fluid, gleichzeitig nimmt der Reibungswiderstand der Kanäle zu, was zu einem Anstieg des Druckverlustes führt. Aus diesem Grund sind die hydraulischen Kanaldurchmesser bevorzugt größer als 1,5 mm, besonders bevorzugt größer als 2 mm. Bevorzugt ist der hydraulische Kanaldurchmesser hierbei kleiner 15 mm, besonders bevorzugt kleiner 10 mm. Um die erfindungsgemäße mehrfache Umlenkung der Kanäle zu gewährleisten, ist der hydraulische Durchmesser der Kanäle derart nach oben begrenzt, dass über den Strömungsquerschnitt des Formkörpers bevorzugt mindestens 15 Strömungskanäle vorhanden sind.

Enge Umlenkungen, d.h. geringe Umlenkradien, bewirken z.B. Verwirbelungen in den Kanälen, die auf Kosten eines erhöhten Strömungswiderstands den Stoff- und Wärmetransport von Feststoff und strömendem Fluid erhöhen. Bevorzugt beträgt der Radius der Umlenkungen zwischen ein und zwei hydraulischen Durchmessern der Kanäle. Die Winkel der Umlenkungen haben verglichen mit den anderen Größen einen eher geringen Einfluss auf die Transporteffekte, so dass sie je nach gewünschter Strömungsführung ein einem sehr weiten Bereich variiert werden können. Bevorzugt betragen sie zwischen 45° und 225°.

Bei einem Wanddurchbruch, der auch als Öffnung an der Außenfläche des Formkörpers bezeichnet wird, erreicht der Kanal die Mantelfläche des Formkörpers und öffnet sich hier nach außen. Hierbei kann ein Wanddurchbruch seinerseits eine gerade Kanalstrecke oder eine Umlenkung darstellen. Betrachtet man einen erfindungsgemäßen Formkörper, ermöglichen somit die Wanddurchbrüche einen gewissen Einblick in das Innere des Formkörpers. Ein Wanddurchbruch ist ebenfalls entsprechend durch die vorstehend für die anderen Elemente der Topologie aufgeführten Größen zu definieren, weiterhin ist er durch die Größe und Form der Fläche der Öffnung zur Mantelfläche des Formkörpers definiert.

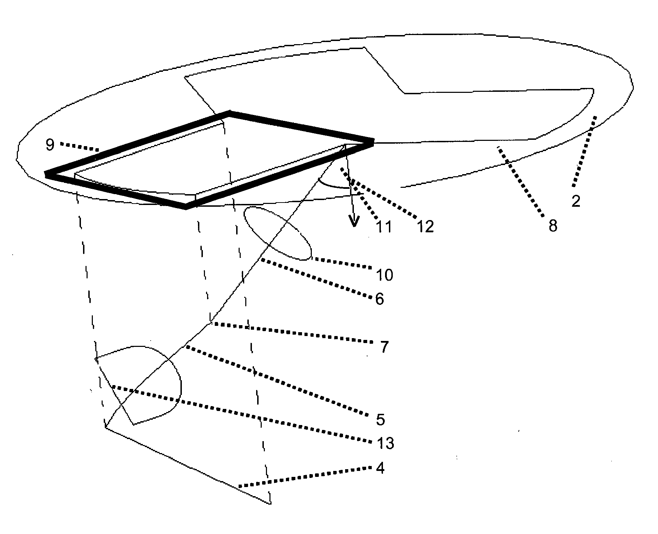

Die Wanddurchbrüche weisen wie die anderen topologischen Elemente prinzipiell eine beliebige Kanalform auf, bevorzugt ist hier aber keine kreisrunde, sondern eine nach außen flache Kanalform. Eine nach außen flache Kanalform ist z.B. gegenüber einer kreisrunden Kanal vorteilhaft, da ein kreisrunder Kanal die Außenwand nur tangiert und nicht bzw. nur punktuell durchbricht. Eine flache Kanalform entsteht aus einem kreisrunden Kanal zum Beispiel derart, dass der zur Verbindung von Kanalzentrum zur Formkörperwand senkrechte Durchmesser in Richtung Formkörperwand zu einem Rechteck geformt wird. Dadurch erhält man eine Kanalform, die aus einem Halbkreis und einem Rechteck besteht (siehe Figur 3) und die Außenfläche des Formkörpers mit einer Breite vom Kanaldurchmesser durchbricht. Um den Stoff- und Wärmetransport an die Reaktorwandung möglichst effizient zu gestalten, kann der hydraulische Durchmesser gegenüber dem der anderen topologischen Elemente erniedrigt werden. Des Weiteren beträgt das Verhältnis der Wanddurchbruchsfläche zur gesamten Oberfläche des Kanals im Bereich des Wanddurchbruchs bevorzugt zwischen 20 und 50%.

Der hauptsächliche Wärmetransport zwischen Reaktorwandung und Formkörper vollzieht sich vorwiegend in den Wanddurchbrüchen. Die Kanäle in den erfindungsgemäßen Formkörpern benötigen daher mindestens einen Wanddurchbruch über die Lauflänge der Kanäle. Die Kanäle im Innern des Formkörpers weisen mindestens eine Umlenkung auf. Bevorzugt finden sich hier mindestens zwei Umlenkungen, da somit die erfindungsgemäßen Vorteile besonders effektiv zur Geltung kommen.

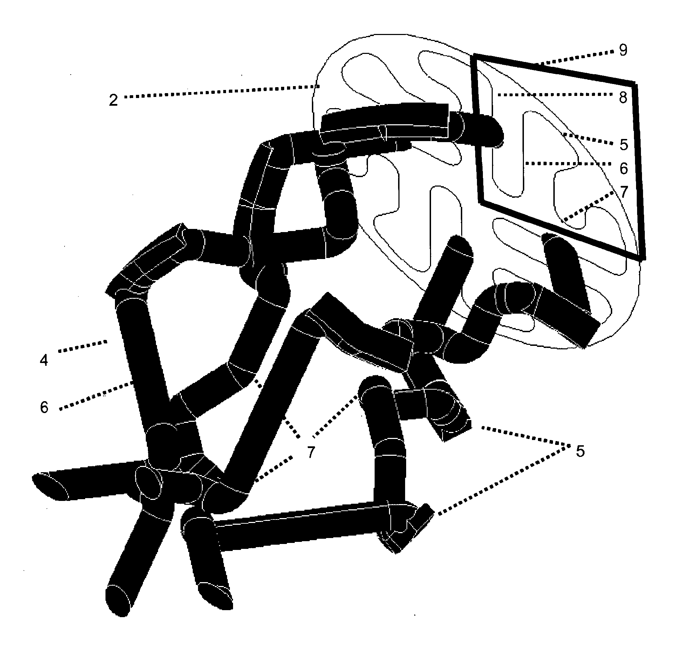

Um einen effizienten konvektiv unterstützten, radialen Wärmetransport zu ermöglichen, ist die Kanalführung so zu wählen, dass die Kanäle vom Innern des Formkörpers möglichst schnell an die Mantelfläche des Formkörpers führen. Projiziert man die Kanalführung in eine Ebene senkrecht zur Hauptströmungsrichtung (siehe Figuren 2,3) so ist zu erkennen, dass die Kanäle stückweise nach innen und teilweise nach außen weisen. Der erfindungsgemäße Formkörper zeichnet sich dadurch aus, dass die Länge der projizierten Wegstrecke von jedem Punkt auf der Lauflänge des Kanals bis zum nächsten Wanddurchbruch möglichst kurz ist, bevorzugt nicht länger ist als das 1,1-fache des Durchmessers. Für den realen Kanal bedeutet dies, dass die Länge des Kanalabschnitts bis zum nächsten Wanddurchbruch die Länge L gemäß der folgenden Gleichung bevorzugt nicht überschreitet:

$$L = 1{,}1 \cdot D / \sin(\alpha)$$

Dabei bezeichnen D den hydraulischen Durchmesser des Formkörpers und $\alpha$ den mittleren Winkel des Kanals gegenüber der Hauptströmungsrichtung. Bevorzugt ist der Winkel für alle Elemente der Topologie innerhalb eines Formkörpers gleich, dann ist der mittlere Winkel gleich dem Winkel der Elemente der Topologie. Er kann jedoch auch variieren, dann ergibt sich der mittlere Winkel als der über die Längen der jeweiligen Elemente der Topologie gewichtete Mittelwert.

Der hydraulische Durchmesser D des Formkörpers ist definiert durch das vierfache Verhältnis von Fläche A zu Umfang U des Strömungsquerschnitts, entsprechend der Formel:

$$D = 4 \cdot A/U$$

Der hydraulische Durchmesser $d_h$ des Kanals ist definiert durch das Verhältnis von vierfachem Kanalvolumen (V) zu Kanaloberfläche (O) entsprechend der Formel:

$$d_h = 4 \cdot V/O$$

Um die erfindungsgemäßen Vorzüge der verbesserten Wärmeabfuhr oder Wärmezufuhr an die Außenwand zu gewährleisten, ist eine gewisse Mindesthöhe des Formkörpers erforderlich.

Die Mindesthöhe H des erfindungsgemäßen Formkörpers ergibt sich nach der Formel:

$$H = D / \tan(\alpha)$$

Die verschiedenen genannten Eigenschaften der einzelnen topologischen Elemente können von Element zu Element variieren. Möglich sind kreisförmige, ovale, quadratische, rechteckige oder beliebig geformte Geometrien. Auch der Winkel gegenüber der Hauptströmungsrichtung kann von Element zu Element unterschiedlich sein. Wichtig ist nur, dass die Kanäle bezüglich der Topologie im Sinne der vorstehend gegebenen Definition identisch sind, d.h. die Abfolge der Elemente ist gleich, nur Startpunkt bzw. Endpunkt können von Kanal zu Kanal phasenverschoben sein.

Aus den Elementen lässt sich dann gewichtet mit den Längen der Elemente der mittlere Winkel der Kanäle gegenüber der Hauptströmungsrichtung definieren. Der mittlere hydraulische Durchmesser der Kanäle ergibt sich durch das Verhältnis von vierfachem Gesamtvolumen des Kanals zu gesamter Oberfläche des Kanals (analog zu obiger Gleichung für die Teilelemente).

Aus der Geometrie kann man das Öffnungsverhältnis des Formkörpers berechnen, indem die Summe der Volumina der Kanäle durch das Gesamtvolumen des Formkörpers geteilt wird. Das Gesamtvolumen des Formkörpers ergibt sich aus Addition der Summe der Volumina der Kanäle plus das Volumen der festen Zwischenräume zwischen den Kanälen. Das Öffnungsverhältnis beträgt zwischen 35% und 95%, bevorzugt zwischen 45% bis 75%.

In einer bevorzugten Ausgestaltung können auch mehrere, erfindungsgemäße Formkörper hintereinander in Reaktoren eingebaut werden.

Die Formkörper sind bevorzugt dafür geeignet, in Reaktoren eingesetzt zu werden.

Es kann sich schwierig gestalten, den Formkörper so einzuführen, dass keinerlei Spalt zwischen Reaktorwand und Formkörper bzw. zwischen nebeneinander angeordneten Formkörpern existiert. Dies kann für diesen Fall dadurch erreicht werden, dass das Einführen bei erhöhter Temperatur geschieht. Bei erhöhter Temperatur dehnt sich die Reaktorwand, die bevorzugt aus Metall besteht, in der Regel mehr aus als der Formkörper. Dadurch kann der Formkörper eingeführt werden. Beim Abkühlen schließt sich der Spalt und es besteht flächiger Kontakt zwischen der Formkörperaußenfläche (bzw. bei mehreren Formkörpern im Reaktorquerschnitt auch zwischen den Formkörpern), so dass keine Bypass-Strömung zwischen Reaktorwandung und Formkörper (bzw. auch zwischen side-by-side angeordneten Formkörpern) besteht. Falls ein Spalt unerwünscht ist, kann dieser durch weitere Maßnahmen abgedichtet oder verringert werden. So ist z.B. aus der Abgaskatalyse, bei der monolithische Formkörper verwendet werden, das Einführen von keramischen - und dadurch temperaturbeständigen - Matten zwischen Reaktorwandung und Formkörpern bekannt. Packungen, die in z.B. in Destillationskolonnen eingesetzt werden, weisen dünne Metallbleche auf, die dem Fachmann als Randabweiser bekannt sind. Diese Metallbleche sind um die Packung gelegt und an mehreren Stellen teilweise eingeschnitten. Dadurch können Metallstreifen nach außen weggebogen werden. Der Packungsdurchmesser ist dann formal größer als der Kolonnen- oder Rohrdurchmesser. Beim Einführen schmiegen sich die Metalllippen dann an die Reaktorwandung an und verhindern weitgehend die Randgängigkeit der Strömung. (Z. Olujic et al., Influence of corrugation geometry on the performance of structured packings: an experimental study, Chemical Engineering and Processing 39, pp. 335-342, 2000 und Z. Olujic et al., Stretching the Capacity of Structured Packings, Ind. Eng. Chem. Res. 40, pp. 6172-6180, 2001).

In der Regel wird es im eingebauten Zustand einen kleinen Spalt zwischen Reaktorwandung und dem Mantel des Formkörpers geben. Wenn über den Reaktorquerschnitt mehrere Formkörper verwendet werden, dann kann ein solcher Spalt auch zwischen den Formkörpern bestehen. Das fluide Medium kann anstatt durch die Strömungskanäle zum Teil auch durch diese Spalte strömen. Dieser Effekt ist als Bypass-Strömung bekannt. Um den Anteil der Bypass-Strömung gering zu halten, sollten die Spalte eng gewählt werden. Ist dies nicht möglich, kann die Bypass-Strömung durch weitere Maßnahmen begrenzt werden. Zum Einen können elastische Matten in die Spalte gedrückt werden (z.B. die aus der Abgaskatalyse bekannten keramischen Matten, zum anderen können analog zur Gestaltung von Destillationspackungen an die Reaktorwandung anschmiegsame, eingeschnittene Metallstreifen an die Formkörper angesetzt werden.

Des Weiteren bzw. alternativ können die Formkörper an den Wandungen mit Randabweisern in Form von Nuten, überstehenden Noppen oder Stegen, versehen werden. Dies ist bei Strömungsmaschinen unter dem Namen Labyrinth-Dichtung bekannt (siehe z.B. I.E. Idelchik, Handbook of Hydraulik Resistance, CRC Press, Boca Raton, 3rd ed., 1993, Seiten 547-549). An den dadurch entstehenden Kanten wird die Bypass-Strömung leicht umgelenkt bzw. verwirbelt. Dadurch verringert sich durch Erhöhung des Strömungswiderstands der Anteil der Bypass-Strömung. Die Verwirbelung sorgt zusätzlich für einen Austausch der Bypass-Strömung mit der Strömung durch die Kanäle, die in den Wanddurchbrüchen zwischen Reaktorwandung und Formkörpermantel gelangt.

Dadurch erhält man eine leichte Quervermischung, was z.B. bei Anwendung der Formkörper in der heterogenen Katalyse leichte Unterschiede im Reaktionsfortschritt ausgleicht. Zum Einen wird durch die Vermischung von Bypass- mit Kanaldurchströmung insgesamt dadurch dafür gesorgt, dass jeder Volumenanteil der Strömung mit dem Formkörper in Verbindung kommt. Zum Anderen wird dafür gesorgt, dass Unterschiede in der Durchströmung der Kanäle aufgrund von Toleranzen bei der Fertigungsgenauigkeit ausgeglichen werden kön-

nen.

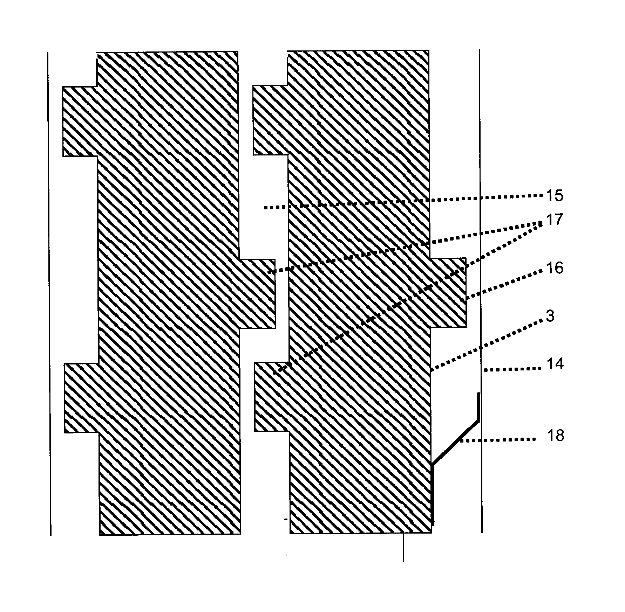

Das Anbringen von Randabweisern ist aus weiteren Gründen sehr vorteilhaft. Zum Einen wird durch den erhöhten Strömungswiderstand gerade im Bereich zwischen Reaktorwandung und Formkörper der Wärmetransport zwischen Reaktorwandung und Formkörper erhöht. Die Randabweiser werden bevorzugt derart angebracht, dass sie den Zwischenraum zwischen Wanddurchbruch und Reaktorwandung nicht blockieren. Teilt man den Spalt zwischen Reaktorwandung und Formkörpermantel gedacht in zwei Teile auf, den einen Teil von Reaktormantel bis Spitze der Randabweiser und den anderen Teil zwischen Randabweiser und Formkörpermantel, so ist letzterer Anteil auch bei Anliegen des Formkörpers an den Reaktormantel vorhanden. Verglichen mit der Situation ohne Randabweiser wird der Formkörper dadurch zentriert (siehe Figur 7). Die Randabweiser, die zwischen side-by-side-angeordneten Formkörpern angebracht werden, sind vorzugsweise so an dem Formkörpern anzubringen, dass sie ineinandergreifen und so für eine bessere Abdichtung analog einer Labyrinth-Dichtung sorgen (siehe Figur 7).

Die Breite des Spaltes ist möglichst gering zu wählen. Die Höhe der Randabweiser sollten bevorzugt mindestens 50% der Spaltbreite ausmachen.

Wenn die Fläche des Spaltes mehr als ca. 5% der Summe der Querschnittsflächen der Strömungskanäle ausmacht oder der Bypass weiter verringert werden soll, so kann der Formkörper an der Außenwand bevorzugt zusätzlich mit Randabweisern versehen werden. Diese werden in der Regel so ausgeführt, dass sie eine Bypassströmung an der Außenwand des Formkörpers vorbei weitgehend verhindern. Die Randabweiser verlaufen vorzugsweise entlang des Umfangs des Formkörpers, sind an der Mantelfläche des Formkörpers angebracht und sind etwa parallel zur Ebene des Strömungsquerschnitts, d.h. quer zur Hauptströmungsrichtung ausgerichtet. Sie sind bevorzugt derart anzubringen, dass sie die Wanddurchbrüche nicht blockieren. Randabweiser haben den zusätzlichen Vorteil, dass sie den Formkörper im Reaktor zentrieren, so dass die Strömung in den Kanalsegmenten mit Wanddurchbruch von Kanal zu Kanal nicht variiert.

Eine zusätzliche Strukturierung der Eintrittsflächen und Austrittsflächen in Form von Noppen, Nuten, Stegen und/oder Rippen ist vorteilhaft, da sie die Blockade von Kanälen bei Übereinanderstapeln von Formkörpern verhindern. Ansonsten muss beim Stapeln von Formkörpern darauf geachtet werden, dass die Kanalöffnungen an der Formkörperaustrittsseite möglichst direkt über den Kanalöffnungen der Eintrittsseite des nächsten Formkörpers liegen. Bei technischen Reaktoren mit einer Vielzahl von Kanälen und einer Vielzahl von übereinandergestapelten Formkörpern ist das nur schwer möglich, so dass punktuelle Noppen zwischen den Formkörpern vorteilhaft sind. Die Länge dieser Noppen liegt vorteilhafterweise im Bereich von 0,1 hydraulischen Kanaldurchmessern bis 3 hydraulischen Durchmessern der Kanäle, bevorzugt zwischen 0,5 und 1,5 hydraulischen Durchmessern der Kanäle.

Bevorzugt werden die erfindungsgemäßen Formkörper bei Reaktoren eingesetzt, welche einen ovalen oder besonders bevorzugt kreisförmigen Querschnitt haben. Hier kommt der Vorteil der identischen Topologie besonders wirksam zum Tragen, da auch hier eine gleichmäßige Strömungsführung und somit rasche und effektiver Wärmetransport gewährleistet ist.

Der Druckverlust beim erfindungsgemäßen Formkörper wird hauptsächlich in den Umlenkungen erzeugt, d.h. vorrangig im Bereich der Wanddurchbrüche. Der Druckverlust kommt durch zusätzliche Strömungseffekte in Form von z.B. Verwirbelungen zustande, die zusätzlich den Wärmeübergang erhöhen. Zusätzlich zum konvektiven, gerichteten Wärmetransport in radialer Richtung innerhalb des Formkörpers wird auf diese Weise der Wärmetransport vom Formkörper an den Reaktormantel erhöht. Verglichen mit allen in der heterogenen Katalyse üblichen Formkörpern wird in dieser Erfindung der Druckverlust gerade in den Regionen erzeugt, in denen er zur Erhöhung des Wärmetransports notwendig ist. In den übrigen Bereichen fällt er dagegen vorteilhafterweise deutlich geringer aus.

Die Kanäle ermöglichen einem dem Formkörper an den Kanalöffnungen an der Eintrittsseite zugeleiteten Einsatzstoff ein Durchströmen des Formkörpers bis zur Austrittsseite. Gemäß der Kanalführung anhand von geraden, gegenüber der Hauptströmungsrichtung geneigten Strecken, Umlenkungen und Wanddurchbrüchen wird jedes Fluidelement entlang der Strömung sehr effizient an die mantelseitige Außenfläche des Formkörpers geführt, was einen sehr effizienten radialen Stoff- und Wärmetransport ermöglicht. Je nach Aufgabenstellung kann der Neigungswinkel der topologischen Elemente gegen die Hauptströmungsrichtung bezüglich radialem Wärmetransport versus Druckverlust optimiert werden. So mag in einer Anwendung ein besonders hoher Wärmeübergang notwendig sein, der Druckverlust aber nur wenig limitierend. Dann werden die Kanäle bezüglich eines besonders großen Wärmeübergangs optimiert, indem der Neigungswinkel der Kanäle gegen die Hauptströmungsrichtung möglichst groß gewählt wird. In einem anderen Fall mag der Druckverlust limitierend sein, so dass die geometrische Gestaltung der Kanäle sich maßgeblich am Strömungswiderstand orientiert. Dann wird der Neigungswinkel gegen die Hauptströmungsrichtung tendenziell eher klein gewählt werden.

Bevorzugt beträgt der Neigungswinkel $\alpha$ des Kanals gegenüber der Hauptströmungsrichtung 30° bis 80° (siehe Figur 3). Daraus ergibt sich, dass jedes Fluidelement im Strömungsquerschnitt innerhalb einer Wegstrecke von maximal etwa zwei Formkörperdurchmessern (bei 30° Neigungswinkel) bzw. einem Formkörperdurchmesser (bei 80° Neigungswinkel) an die mantelseitige Außenfläche geführt wird. Damit wird ein besonders effizienter Wärmeaustausch mit der Umgebung ermöglicht. Da die erfindungsgemäßen Kanäle im Formkörper Umlenkungen aufweisen und jeder Kanal dieselbe Topologie aufweist, werden die oben genannten Nachteile der DE 10159824 vermieden. Mit parallelen geradlinigen Kanälen wäre dies so nicht möglich.

Auf diese Weise entsteht im erfindungsgemäßen Formkörper eine mäanderförmige Strömung, durch die das Reaktionsmedium durch viele geometrisch gleichartige Kanäle strömt und dabei eine effiziente Wärmeabfuhr an die Wand ermöglicht.

Insgesamt sind die hier beschriebenen Formkörper als Formkörper anzusehen, die die Vorteile der monolithischen Kanäle (Gleichartigkeit der Durchströmung und geringer Druckverlust) mit denen von strukturierten Packungen bzw. Schüttungen (höherer radialer Wärmeaustausch) verbinden und die Vorteile noch weiter verstärken. Die Verstärkung wird dadurch erreicht, dass der Winkel zwischen Hauptströmungsrichtung und Kanalrichtung so weit erhöht werden kann, dass der radiale Wärmetransport stark erhöht wird und maßgeblich von der Strömungsrichtung bestimmt wird, da die Konvektion die Wärme nach außen (oder innen) bringt.

Der erfindungsgemäße Formkörper bietet eine verfahrenstechnisch einfache und effektive Möglichkeit, Wärme aus Reaktoren gleichmäßig und schnell bei günstigen Druckverlustverhältnissen zu- oder abzuführen. Entsprechend können sie sowohl bei exothermen als auch endothermen Reaktionen eingesetzt werden. Durch die identische Topologie der Kanäle und ihre Abtrennung im Innern des Formkörpers wird gewährleistet, dass die Wärme durch sämtliche Kanäle gleichmäßig und sehr effektiv zu- oder abgeführt wird. Weiterhin können sie einfach in den Reaktor eingebaut werden. Durch das bevorzugt eingesetzte Rapid-Prototyping-Verfahren können sie einfach bei hoher Qualität hergestellt werden. Je größer der Neigungswinkel gegenüber die Hauptströmungsrichtung, desto schneller werden die Kanäle gemäß Gleichung (1) in an die Reaktorwandung geführt und desto effektiver wird die Wärme in radialer Richtung transportiert. Je kleiner der Neigungswinkel, desto geringer wird der Druckverlust, so dass der Formkörper je nach Vorgaben an den Reaktor optimiert werden kann.

Vergleicht man den erfindungsgemäßen Formkörper mit üblicherweise verwendeten Formkörpern, so ergeben sich die folgenden weiteren Vorteile:

- Schüttungsgefüllte Reaktoren bestehen üblicherweise aus zufällig orientierten Formkörpern mit deutlich kleineren Abmessungen als der Reaktordurchmesser. Verglichen mit den erfindungsgemäßen Formkörpern werden die Formkörper daher leichter von der Strömung mitgerissen, was aufwändigere Formkörperrückhaltesysteme erfordert.
- Zusätzlich reiben die Formkörper bei zufälliger Ausrichtung und kleineren Abmessungen einfacher aneinander, was zu Partikelabrieb und Partikelbruch führen kann. Das wiederum hat einen größeren Strömungswiderstand und/oder zusätzlichen Partikelaustrag zur Folge.

- Verglichen mit Schüttungen wird der Druckverlust in der erfindungsgemäßen Ausführung hauptsächlich in Reaktorwandnähe erzeugt, d.h. dort wo er effizient zum Zu- oder Abtransport verwendet werden kann. Durch den ebenfalls durch Konvektion sehr großen radialen Wärmetransport können Reaktoren mit größeren Durchmessern ausgelegt werden, was z.B. bei Anwendung in Rohrbündelreaktoren die Zahl der notwendigen Rohre vermindert.
- Gerade Partialoxidationen, bei denen die Produktselektivität und -ausbeute maßgeblich von der Temperatur im Reaktor abhängt, können so mit höherer Ausbeute betrieben werden.

In einer weiteren bevorzugten Ausgestaltung der Erfindung sind die erfindungsgemäßen Formkörper selbst katalytisch aktiv oder dienen sie als Träger für Katalysatoren. Nach der Herstellung des erfindungsgemäßen Formkörpers kann dieser gegebenenfalls noch durch Aufbringung mindestens einer (weiteren) katalytisch aktiven Komponente modifiziert werden und der so gewonnene Formkörper mit katalytischen Eigenschaften kann für beliebige heterogen katalysierte chemische Reaktionen verwendet werden. Nähere Ausführungen dazu finden sich in der der europäischen Patentanmeldung mit dem Aktenzeichen 07118050.9, auf welche hiermit ausdrücklich Bezug genommen wird.

Bevorzugt werden die erfindungsgemäßen Formkörper nach dem pulverbasierten Rapid-Prototyping-Verfahren hergestellt. Dies ist beispielsweise in der europäischen Patentanmeldung mit dem Aktenzeichen 07118050.9 offenbart, auf welche hiermit ausdrücklich Bezug genommen wird.

Bevorzugt werden die erfindungsgemäßen Formkörper bei stark exothermen oder stark endothermen Reaktionen eingesetzt, bei welchen zur Vermeidung von Hot-Spots und bei Verwendung von Katalysatorschüttungen sehr dünne Rohre eingesetzt werden müssen oder auch exotherme Reaktionen, bei denen der Druckverlust die Anwendung stark limitiert. Beispielhaft können hier Partialoxidationen wie die Herstellung von Ethylenoxid, Phthalsäureanhydrid oder Maleinsäureanhydrid genannt werden. Die erfindungsgemäßen Formkörper können aber auch allgemein für Oxidationen, Ammoxidationen, Hydrierungen, Dehydrierungen, Isomerisierungen, Hydratisierungen, Dehydratisierungen, Aminierungen, Nitrierungen, Alkylierungen, Dealkylierungen, Disproportionierungen, Acylierungen, Alkoxylierungen, Epoxidationen, Veresterungen, Umesterungen, Metathesereaktionen, Dimerisierungen, Oligomerisierungen oder Umlagerungen eingesetzt werden.

Im folgenden wird der erfindungsgemäße Formkörper anhand der Figuren exemplarisch näher beschrieben.

Figur 1 zeigt eine Darstellung für einen beispielhaften erfindungsgemäßen Formkörper (1). Zu erkennen sind die Stirnflächen des Formkörpers, d.h. Eintritts- und Austrittsfläche, (2), die Außenfläche, d.h. Mantelfläche, (3), die Kanäle (4) mit Wanddurchbrüchen (5).

Figur 2 zeigt das Negativ dieses Formkörpers, wobei nur vier der topologisch identischen Kanäle (4) gezeigt sind. Zu sehen sind jeweils zwei Wanddurchbrüche (5) für jeden Kanal, mehrere gerade Wegstrecken (6) und Umlenkungen (7). Ebenfalls eingezeichnet ist die Projektion (8) der Kanalachse auf die Stirnfläche (2). In dieser Projektion sind ebenfalls die geraden Wegstrecken (6), die Umlenkungen (7) sowie die Wanddurchbrüche (5) zu erkennen. Der dick umrahmte Teil (9) beschreibt die topologische Abfolge im Formkörper. Es ist zu erkennen, dass die maximale Wegstrecke von Wanddurchbruch zu Wanddurchbruch in der Projektionsebene kleiner ist als 110% des Durchmessers.

Figur 3 erläutert die Topologie schematisch. Dargestellt sind wieder eine Stirnfläche (2) mit der Projektion der Topologie der Kanalachse (8,9) und einer der Kanäle (4). Dieser Kanal weist folgende topologischen Elemente auf: Gerade Wegstrecken (6) mit kreisrunder Kanalform (10) und Winkel (11) gegenüber der Hauptströmungsrichtung (12), Umlenkungen (7) sowie Wanddurchbrüche (5) mit der zur Außenfläche des Formkörpers flachen Kanalform (13). Figur 3 zeigt, dass die Topologie der Kanäle direkt aus der Projektion der Kanalachsen ersichtlich wird (gestrichelte Verbindungslinien von der Kanalachse zur Projektion derselben).

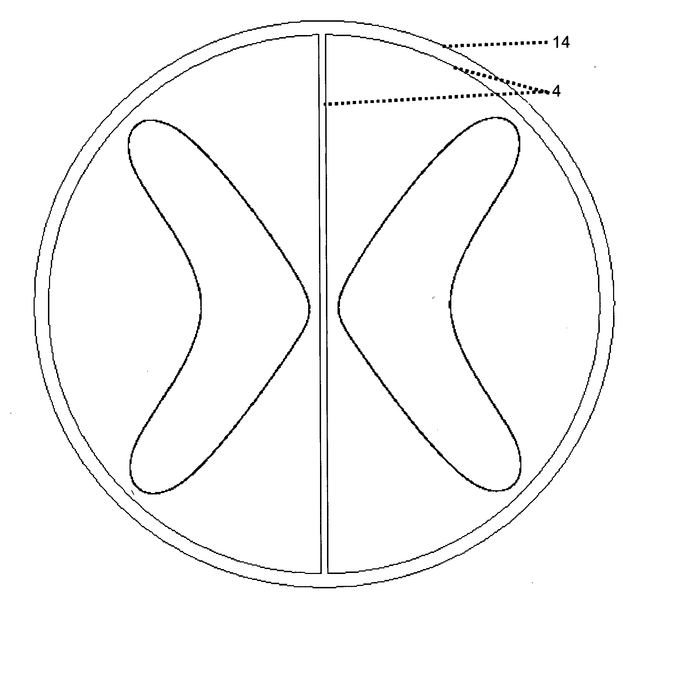

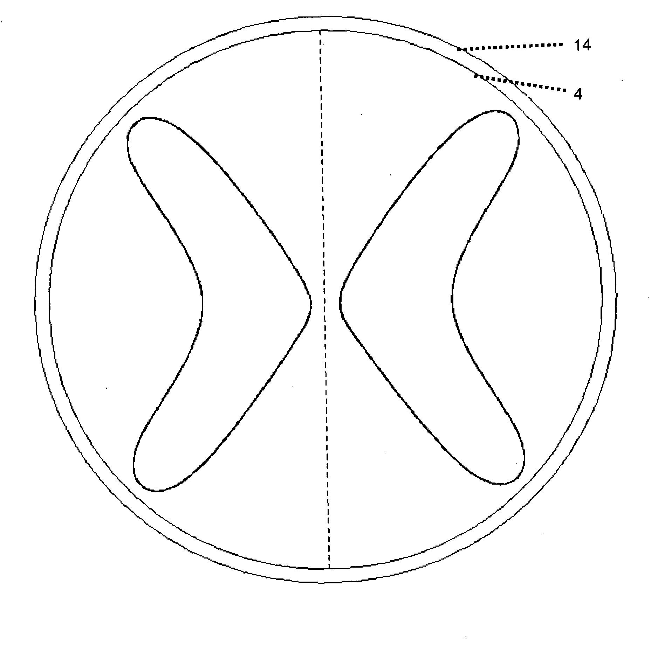

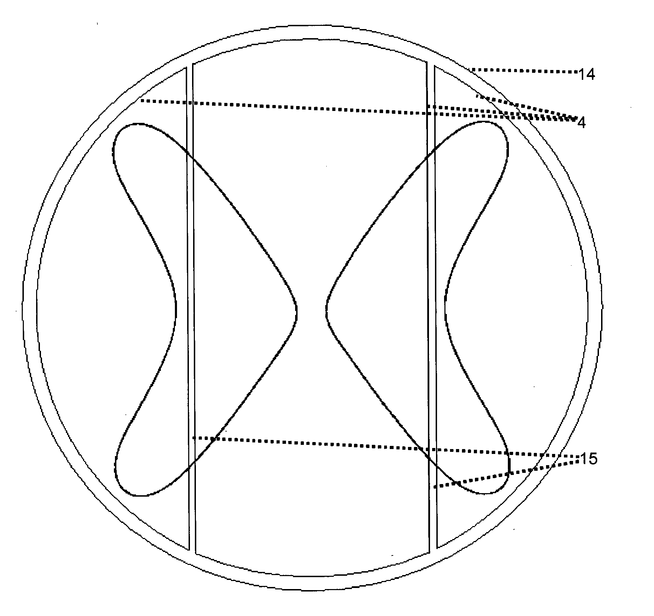

Figuren 4, 5 und 6 zeigen drei weitere mögliche erfindungsgemäße Formkörper in einem Rohr (14), dargestellt sind die Kanalachsen in der Projektionsebene. Figur 4 zeigt eine mögliche Anordnung aus mehreren aneinandergefügten, erfindungsgemäßen Formkörpern, wobei die Außenflächen der Formkörper (4) ebenfalls eingezeichnet sind in der Rohrebene. Figur 5 zeigt einen Formkörper, welcher durch Zusammenfügen (an der gestrichelten Linie) mehrerer erfindungsgemäßer Formkörper entsteht, so dass eine andere Außenfläche der Formkörper entsteht. Figur 6 zeigt zwei Formkörper, wobei die entstehende Struktur einem erfindungsgemäßen Formkörper mit Fugennähten (15) entspricht.

Figur 7 zeigt Randabweiser (16) zwischen Rohrwand (14) und der Außenfläche (3) bzw. ineinandergreifende Randabweiser (17) in einer Fugennaht (15) bei mehreren im Strömungsquerschnitt aneinandergefügten Formkörper, so dass möglicherweise eine Art Labyrinthdichtung entsteht, sowie das Beispiel einer anschmiegsamen Abdichtung (18) gegenüber der Rohrwand.

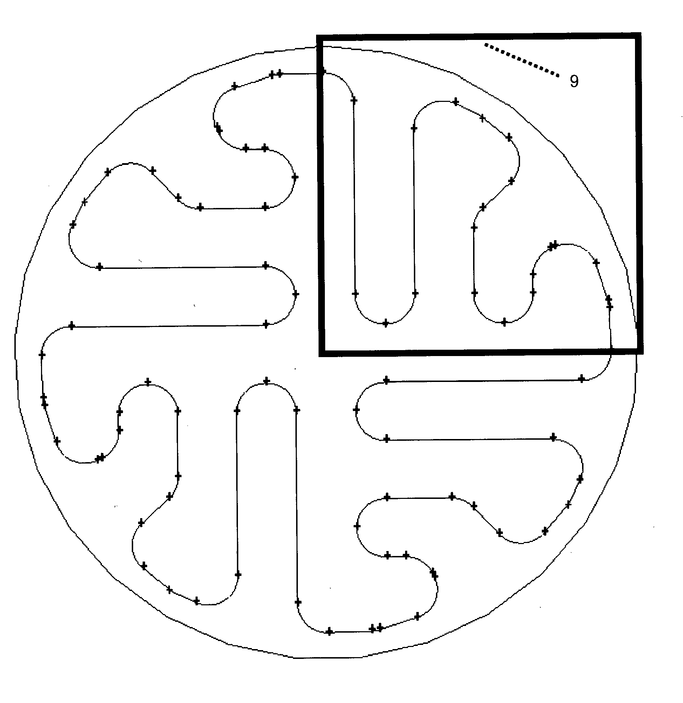

Figur 8 zeigt für den Formkörper aus Figuren 1,2 die Projektion der Kanalmittenachse in den Strömungsquerschnitt. Dick umrahmt gezeigt ist die Abfolge der Elemente der Topologie (9). Die Symbole deuten den Übergang zwischen den Elementen der Topologie an.

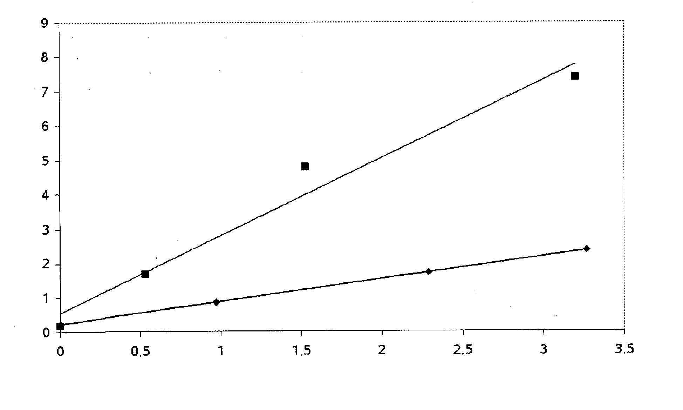

In Figur 9 sind die in den Beispielen ermittelten radialen Wärmeleitfähigkeitskoeffizienten in W/m/K über dem zugeführten auf die Fläche des Reaktorquerschnitts bezogenen Massenstrom in kg/m$^2$/s dargestellt.

Beispiele

In den folgenden beiden Beispielen wurde jeweils ein Rohr mit einem Innendurchmesser von 51 mm in seinem Inneren mit einem erfindungsgemäßen Formkörper (Beispiel 1) bzw. mit einer Kugelschüttung (Beispiel 2) versehen. Im Anschluss wurde das auf Raumtemperatur temperierte kalte Rohr mit auf Raumtemperatur temperierter kalter Luft durchströmt. Während der Durchströmung wurden die Wände des Rohres innerhalb von ca. 100 min. beginnend bei Raumtemperatur auf 300°C aufgeheizt. Die radialen Temperaturprofile wurden am Eintritt in das Rohr, vor und nach dem Formkörper bzw. auf mehreren Ebenen innerhalb der Schüttung mit mehreren Thermoelementen an verschiedenen radialen Positionen kontinuierlich gemessen. Ebenfalls gemessen wurden die Wandtemperaturen an mehreren axialen Positionen entlang des Formkörpers bzw. entlang der Schüttung. Diese Messung wurde jeweils für die auf den Strömungsquerschnitt des Leerrohrs bezogene Massenströme 0,5, 1,5 und 3,2 kg/m$^2$/s durchgeführt. Die so erzeugten Messwerte lieferten ein zeitlich instationäres und räumlich aufgelöstes Temperaturprofil im Formkörper bzw. in der Schüttung. Durch modellmäßige Abbildung und Berechnung der Wärmebilanz konnten aus diesen Temperaturprofilen die Wärmeströme und die Wärmetransportparameter berechnet werden.

Beispiel 1:

Hier wurde ein erfindungsgemäßer Formkörper eingesetzt. Es handelt sich um einen mit dem Rapid-Prototyping aus einem α-Al203-Pulver hergestellten Formkörper, der aus Gemisch von Einzelpartikeln mit einem Durchmesser von weniger als 200 μm besteht. Der Formkörper hat einen Durchmesser von 50 mm und eine Höhe von 74 mm. Die Kanäle sind kreisrund und haben einen Durchmesser von 4,3 mm. Der Formkörper besteht aus 44 topologisch identischen Kanälen (dargestellt in Figuren 1,2). Die Projektion der Kanalmittenachse auf die Eintrittsfläche des Formkörpers ist in Figur 8 dargestellt. Sie zeigt dick umrahmt (9) die Abfolge der Elemente der Topologie innerhalb des Formkörpers als auf den Strömungsquerschnitt projizierte Kanalachse. Die kreuzförmigen Symbole deuten die Übergänge zwischen den Elementen der Topologie an. Der mittlere Winkel α beträgt etwa 50°, wobei der Winkel der meisten Elemente der Topologie zwischen 45° und 65° variiert und nur einzelne Elemente einen Winkel von mehr als 70° aufweisen.

Beispiel 2:

Hierbei wurde in das oben genannte Rohr mit einem Durchmesser von 51 mm eine Kugelschüttung mit Kugeldurchmesser von 6,6 mm eingesetzt. Die Kugelschüttung weist einen identischen Sauterdurchmesser verglichen mit Beispiel 1 auf, d.h. die Oberfläche der Kugeln entspricht der Oberfläche der Kanalwände. Bei Einsatz in der heterogenen Katalyse würde so eine weitgehend identische Katalysatoroberfläche gewährleistet werden. Die Höhe der Schüttung betrug ebenfalls 74 mm.

Bei beiden Versuchen waren die Rahmenbedingungen ansonsten identisch, d.h. es wurde jeweils ein Gasstrom mit gleicher Temperatur und gleichem Volumenstrom dem Rohr zugeführt.

In Figur 9 sind die ermittelten radialen Wärmeleitfähigkeitskoeffizienten in W/m/K über dem zugeführten auf die Fläche des Reaktorquerschnitts bezogenen Massenstrom in kg/m$^2$/s dargestellt. Die großen Quadrate bezeichnen die Ergebnisse aus Beispiel 1, die kleinen Rauten die aus Beispiel 2. Deutlich ist zu erkennen, dass der erfindungsgemäße Formkörper bei allen getesteten Volumenströmen deutlich höhere radiale Wärmeleitfähigkeiten bietet.

**Patentansprüche**

1. Durchgängige Kanäle aufweisender, einstückiger Formkörper mit einem hydraulischen Durchmesser D und einer Höhe H für den Wärme- und / oder Stoffaustausch und / oder heterogene Katalyse, wobei die Kanäle einem zugeleiteten Einsatzstoff ein über eine oder mehrere Richtungsänderungen erfolgendes Durchströmen des Formkörpers von der Eintrittsseite zur Austrittsseite ermöglichen und die Hauptströmungsrichtung des Einsatzstoffes im Formkörper parallel zur Senkrechten durch die vom Einsatzstoff angeströmten Stirnfläche des Formkörpers ist und die Kanäle im Innern des Formkörpers in ihrem Verlauf mindestens eine Umlenkung aufweisen, zwischen denen die Kanäle gerade Wegstrecken ausbilden, wobei die Länge dieser geraden Wegstrecken eine maximale Lauflänge nicht überschreitet und alle Kanäle die gleiche Topologie aufweisen und die Kanäle neben den beiden Öffnungen an der Eintrittsseite und Austrittsseite dazwischen mindestens eine weitere Öffnung an der Außenfläche des Formkörpers aufweisen, wobei die Kanäle in einem mittleren Winkel $\alpha$ gegenüber der Achse der Hauptströmungsrichtung orientiert sind und die Höhe H des Formkörpers mindestens einen Wert beträgt, der sich nach der Formel

$$H = D / \tan(\alpha)$$

berechnet.

2. Formkörper nach Anspruch 1, wobei die Kanäle im Innern des Formkörpers in ihrem Verlauf mindestens zwei Umlenkungen aufweisen.

3. Formkörper nach Anspruch 1 oder 2, wobei die Kanäle in einem mittleren Winkel $\alpha$ von 30° bis 80° gegen die Achse der Hauptströmungsrichtung des Einsatzstoffes geneigt sind.

4. Formkörper nach Ansprüchen 1 bis 3, wobei die maximale Lauflänge eines Kanalsegments, das sich über zwei benachbarte Öffnungen dieses Kanals an der Außenfläche des Formkörpers erstreckt, einen Wert L nicht übersteigt, der sich nach der Formel

$$L = 1{,}1 \cdot D / \sin(\alpha)$$

berechnet, wobei $\alpha$ den mittleren Winkel angibt, den der Kanal gegen die Achse der Hauptströmungsrichtung geneigt ist.

5. Formkörper nach Ansprüchen 1 bis 4, wobei der Formkörper eine zylindrische Form aufweist und die Eintrittsöffnungen bzw. Austrittsöffnungen der Kanäle an den gegenüberliegenden Stirnseiten dieses Zylinders angeordnet sind und wobei die Hauptströmungsrichtung des durch die Kanäle geführten Mediums der Achse dieses Zylinders entspricht und die Projektion eines Kanals in eine Ebene senkrecht zu dieser Achse innerhalb eines Kanalsegments, das sich über zwei benachbarte Öffnungen dieses Kanals an der Außenfläche des Formkörpers erstreckt, eine Länge bezogen auf die Projektionsebene von maximal 110 Prozent des Durchmessers des zylindrischen Formkörpers aufweist.

6. Formkörper nach Ansprüchen 1 bis 5, wobei das Öffnungsverhältnis des Formkörpers gebildet aus dem Verhältnis der Summe der Querschnittsflächen der Kanäle zu der gesamten Querschnittsfläche des Formkörpers 0,35 bis 0,95, bevorzugt 0,45 bis 0,75 beträgt.

7. Formkörper nach Ansprüchen 1 bis 6, wobei der hydraulische Durchmesser der Kanäle 0,5 mm bis 15 mm beträgt.

8. Formkörper nach Ansprüchen 1 bis 7, wobei er Randabweiser aufweist.

9. Durchgängige Kanäle aufweisender, einstückiger Formkörper, welcher aus mindestens zwei Formkörpern nach Ansprüchen 1 bis 8 besteht.

10. Verfahren zur Herstellung eines Formkörpers nach Ansprüchen 1 bis 9, **dadurch gekennzeichnet, dass** man ihn mittels eines pulverbasierten Rapid-Prototyping-Verfahrens herstellt.

11. Verfahren zur Durchführung einer heterogen katalysierten chemischen Reaktion in einem Reaktor, **da-**

**durch gekennzeichnet, dass** man die Formkörper nach Ansprüchen 1 bis 9 als katalytisch aktive Reaktoreinbauten einsetzt.

12. Verfahren nach Anspruch 10 oder 11, **dadurch gekennzeichnet, dass** man die Durchlässigkeit des Wandspalts zwischen Reaktorwand und eingebautem Formkörper durch Randabweiser verringert.

13. Verwendung des Formkörpers nach Ansprüchen 1 bis 9 zur Durchführung von exothermen oder endothermen Reaktionen in der heterogenen Katalyse.

14. Verwendung des Formkörpers gemäß Ansprüchen 1 bis 9 zur Durchführung von Reaktionen, **dadurch gekennzeichnet, dass** die Reaktion ausgewählt ist aus Oxidationen, Ammoxidationen, Hydrierungen, Dehydrierungen, Isomerisierungen, Hydratisierungen, Dehydratisierungen, Aminierungen, Nitrierungen, Alkylierungen, Dealkylierungen, Disproportionierungen, Acylierungen, Alkoxylierungen, Epoxidationen, Veresterungen, Umesterungen, Metathesereaktionen, Dimerisierungen, Oligomerisierungen oder Umlagerungen.

**Claims**

1. A one-piece shaped body having continuous channels and a hydraulic diameter D and a height H for heat and/or mass transfer and/or heterogeneous catalysis, the channels enabling an incoming feedstock to flow through the shaped body from the entry side to the exit side through one or more changes of direction, and the main flow direction of the feedstock in the shaped body being parallel to the vertical through the end face of the shaped body toward which the feedstock flows, and the channels in the interior of the shaped body having at least one change of direction in the course thereof, between which the channels form straight distances, the length of these straight distances not exceeding a maximum length, and all channels having the same topology, and the channels having, as well as the two orifices on the entry side and exit side, at least one further orifice in between on the outer face of the shaped body, the channels being aligned at a mean angle $\alpha$ relative to the axis of the main flow direction and the height H of the shaped body being at least one value which is calculated by the formula

$$H = D \ / \ \tan(\alpha).$$

2. The shaped body according to claim 1, wherein the channels in the interior of the shaped body have at least two changes of direction in the course thereof.

3. The shaped body according to claim 1 or 2, wherein the channels are inclined at a mean angle $\alpha$ of 30° to 80° relative to the axis of the main flow direction of the feedstock.

4. The shaped body according to claims 1 to 3, wherein the maximum length of a channel segment which extends over two adjacent orifices of this channel on the outer face of the shaped body does not exceed a value L which is calculated by the formula

$$L = 1.1 \ \bullet \ D \ / \ \sin( \ \Box )$$

where $\alpha$ is the mean angle at which the channel is inclined relative to the axis of the main flow direction.

5. The shaped body according to claims 1 to 4, wherein the shaped body has a cylindrical shape and the entry orifices and exit orifices of the channels are arranged on the opposite end sides of this cylinder, and wherein the main flow direction of the medium conducted through the channels corresponds to the axis of this cylinder and the projection of a channel in a plane at right angles to this axis within a channel segment which extends over two adjacent orifices of this channel on the outer face of the shaped body has a length based on the projection plane of not more than 110% of the diameter of the cylindrical shaped body.

6. The shaped body according to claims 1 to 5, wherein the orifice ratio of the shaped body formed from the ratio of the sum of the cross-sectional areas of the channels relative to the total cross-sectional area of the shaped body is 0.35 to 0.95, preferably 0.45 to 0.75.

7. The shaped body according to claims 1 to 6, wherein the hydraulic diameter of the channels is 0.5 mm to 15 mm.

8. The shaped body according to claims 1 to 7, which has edge deflectors.

9. A one-piece shaped body having continuous channels, which consists of at least two shaped bodies according to claims 1 to 8.

10. A process for producing a shaped body according to claims 1 to 9, which comprises producing it by means of a powder-based rapid prototyping process.

11. A process for performing a heterogeneously catalyzed chemical reaction in a reactor, which comprises using the shaped bodies according to claims 1 to 9 as catalytically active reactor internals.

**12.** The process according to claim 10 or 11, wherein the permeability of the wall gap between reactor wall and installed shaped body is reduced by edge deflectors.

**13.** The use of the shaped body according to claims 1 to 9 for performing exothermic or endothermic reactions in heterogeneous catalysis.

**14.** The use of the shaped body according to claims 1 to 9 for performing reactions, wherein the reaction is selected from oxidations, ammoxidations, hydrogenations, dehydrogenations, isomerizations, hydrations, dehydrations, aminations, nitrations, alkylations, dealkylations, disproportionations, acylations, alkoxylations, epoxidations, esterifications, transesterifications, metathesis reactions, dimerizations, oligomerizations or rearrangements.

**Revendications**

**1.** Corps moulé monobloc comprenant des canaux continus, présentant un diamètre hydraulique D et une hauteur H, pour l'échange de chaleur et/ou de matière et/ou la catalyse hétérogène, dans lequel les canaux permettent à une matière première introduite de traverser le corps moulé depuis le côté de l'entrée jusqu'au côté de la sortie avec un ou plusieurs changements de direction, et la direction d'écoulement principale de la matière première dans le corps moulé est parallèle à la verticale passant au travers de la face frontale du corps moulé sur laquelle la matière première est incidente, et les canaux présentent au moins une déviation dans leur trajectoire à l'intérieur du corps moulé, entre lesquelles les canaux forment des sections droites, la longueur de ces sections droites ne dépassant pas une longueur d'écoulement maximale, et tous les canaux présentant la même topologie, et les canaux comprenant, en plus des deux ouvertures sur le côté de l'entrée et sur le côté de la sortie, entre elles au moins une ouverture supplémentaire sur la surface extérieure du corps moulé, les canaux étant orientés selon un angle moyen α par rapport à l'axe de la direction d'écoulement principale, et la hauteur H du corps moulé ayant au moins une valeur qui est calculée par la formule

$$H = D/\tan(\alpha).$$

**2.** Corps moulé selon la revendication 1, dans lequel les canaux comprennent au moins deux déviations dans leur trajectoire à l'intérieur du corps moulé.

**3.** Corps moulé selon la revendication 1 ou 2, dans lequel les canaux sont inclinés d'un angle moyen α de 30° à 80° par rapport à l'axe de la direction d'écoulement principale de la matière première.

**4.** Corps moulé selon les revendications 1 à 3, dans lequel la longueur d'écoulement maximale d'un segment de canal s'étendant entre deux ouvertures voisines de ce canal sur la surface extérieure du corps moulé ne dépasse pas une valeur L, qui est calculée par la formule

$$L = 1,1 \cdot D/\sin(\alpha)$$

α étant l'angle moyen d'inclinaison du canal par rapport à l'axe de la direction d'écoulement principale.

**5.** Corps moulé selon les revendications 1 à 4, dans lequel le corps moulé présente une forme cylindrique, et les ouvertures d'entrée et les ouvertures de sortie des canaux sont agencées respectivement sur les côtés frontaux opposés de ce cylindre, la direction d'écoulement principale du milieu traversant les canaux correspondant à l'axe de ce cylindre et la projection d'un canal dans un plan perpendiculaire à cet axe dans un segment de canal qui s'étend entre deux ouvertures voisines de ce canal sur la surface extérieure du corps moulé présentant une longueur, par rapport au plan de projection, d'au plus 110 pour cent du diamètre du corps moulé cylindrique.

**6.** Corps moulé selon les revendications 1 à 5, dans lequel le taux d'ouverture du corps moulé formé par le rapport entre la somme des surfaces transversales des canaux et la surface transversale totale du corps moulé est de 0,35 à 0,95, de préférence de 0,45 à 0,75.

**7.** Corps moulé selon les revendications 1 à 6, dans lequel le diamètre hydraulique des canaux est de 0,5 mm à 15 mm.

**8.** Corps moulé selon les revendications 1 à 7, dans lequel il comprend des déflecteurs de bord.

**9.** Corps moulé monobloc comprenant des canaux continus, qui est constitué d'au moins deux corps moulés selon les revendications 1 à 8.

**10.** Procédé de fabrication d'un corps moulé selon les revendications 1 à 9, **caractérisé en ce qu'**il est fabriqué par un procédé de prototypage rapide à base de poudre.

**11.** Procédé de réalisation d'une réaction chimique sous catalyse hétérogène dans un réacteur, **caractérisé en ce que** les corps moulés selon les revendications 1 à 9 sont utilisés en tant que composants internes du réacteur à action catalytique.

12. Procédé selon la revendication 10 ou 11, **caractérisé en ce que** la perméabilité de l'espace de paroi entre la paroi du réacteur et le corps moulé mis en place est réduite par des déflecteurs de bord.

13. Utilisation du corps moulé selon les revendications 1 à 9 pour la réalisation de réactions exothermiques ou endothermiques sous catalyse hétérogène.

14. Utilisation du corps moulé selon les revendications 1 à 9 pour la réalisation de réactions, **caractérisée en ce que** la réaction est choisie parmi les oxydations, les ammoxydations, les hydrogénations, les déshydrogénations, les isomérisations, les hydratations, les déshydratations, les aminations, les nitrations, les alkylations, les désalkylations, les dismutations, les acylations, les alcoxylations, les époxydations, les estérifications, les transestérifications, les réactions de métathèse, les dimérisations, les oligomérisations ou les réarrangements.

9

11    12

2

8

10

6

7

5

13

4

14

4

15
17
16
3
14
18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10159824
- DE 10208711
- EP 07118050 A

### In der Beschreibung aufgeführte Nicht-Patentliteratur

- **F. STOTER.** Modelling of Maldistribution in Structured Packings: from detail to column design. *Dissertation,* 1993, 23-26
- **Z. OLUJIC et al.** Stretching the Capacity of Structured Packings. *Ind. Eng. Chem. Res.,* 2001, vol. 40, 6172-6180
- **Z. OLUJIC et al.** Influence of corrugation geometry on the performance of structured packings: an experimental study. *Chemical Engineering and Processing,* 2000, vol. 39, 335-342
- **I.E. IDELCHIK.** Handbook of Hydraulik Resistance. CRC Press, 1993, 547-549